Europäisches Patentamt

European Patent Office

Office européen des brevets

(11) Publication number: **0 128 852**
A2

## EUROPEAN PATENT APPLICATION

(21) Application number: **84630085.3**

(22) Date of filing: **01.06.84**

(51) Int. Cl.³: **B 60 C  9/02,** B 60 C  13/00

(30) Priority: **06.06.83  US 501679**

(43) Date of publication of application: **19.12.84 Bulletin 84/51**

(84) Designated Contracting States: **DE FR GB**

(71) Applicant: **THE GOODYEAR TIRE & RUBBER COMPANY, 1144 East Market Street, Akron, Ohio 44316 (US)**

(72) Inventor: **Kolowski, Michael Alois, 2993 Sunnybrook Road, Mogadore Ohio 44260 (US)**
Inventor: **Smithkey, John Clarenc, Jr., 1271 Overland Avenue Northeast, North Canton Ohio 44720 (US)**

(74) Representative: **Weyland, Joseph Jean Pierre, Goodyear International Tire Technical Center Patent Department Avenue Gordon Smith, L-7750 Colmar-Berg (LU)**

(54)  **A pneumatic tire.**

(57)  A pneumatic radial passenger tire (30) having a carcass structure (32) which follows the natural equilibrium curve from a point (43) substantially adjacent the rim to a point (45) substantially against the belt edge. The sidewall (52) having a primary flex zone Zp with a cross-sectional width from the lower sidewall across to the upper sidewall area which is no greater than about .17 inches and a pair of secondary flex zones Zs adjacent said primary flex zone.

## A PNEUMATIC TIRE

The foregoing abstract is not to be taken as limiting the invention of this application, and in order to understand the full nature and extent of the technical disclosure of this application, reference must be made to the accompanying drawings and the following detailed description.

### Background of the Invention

The invention relates to pneumatic tires and more particularly to a radial passenger tire construction. Tire designers are continuously trying to improve the ride, handling, durability and rolling resistance of radial ply passenger tires. However, these physical characteristics are generally at odds with one another. That is, an improvement in one area is obtained at the sacrifice of another. For example, in the prior art the obtainment of improvement in handling and durability of a radial passenger tire generally required the providing of additional reinforcing material in the lower sidewall bead area of the tire. However, this modification is obtained at the sacrifice of rolling resistance of the tire.

Applicants have discovered a particular tire construction whereby the rolling resistance of the tire is improved while at the same time maintaining handling and durability characteristics of the tire.

### Description of the Drawings

Figure 1 is a cross-sectional view of a tire made in accordance with the prior art; and

Figure 2 is a cross-sectional view of a tire made in accordance with the present invention mounted on a rim for which it was designed to be used.

### Detailed Description of the Invention

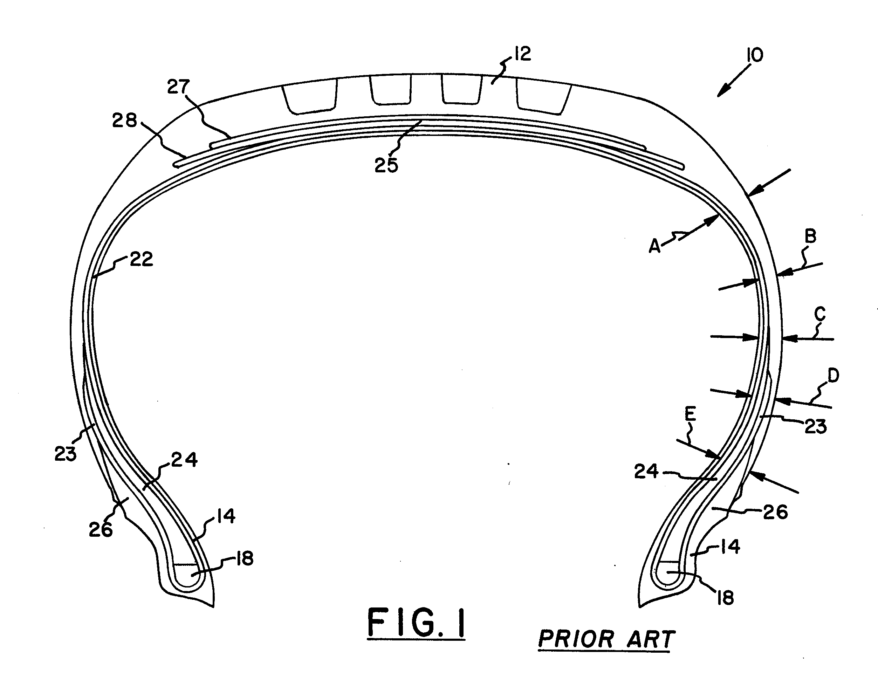

Referring to figure 1, there is illustrated a cross-sectional view of a tire 10 made in accordance with the prior art. The tire 10 comprises a ground-engaging tread portion 12, a pair of bead portions 14 each having an inextensible bead core 18 therein. A sidewall structure connects the axially outer end of the tread with the bead area of the tire. Extending from bead core to bead core there is provided a carcass reinforcing structure 22. The lateral ends of carcass reinforcing structure 22 are wrapped about the bead core 14 so as to provide a turned-up portion 23. Placed between the turned-up portion 23 and the main body portion of reinforcing ply 22 is an elastomeric insert 24 normally referred to as apex in the tire industry. It can be seen that both the apex 24 and turned-up portion 23 extend up into the sidewall portion a considerable distance. Axially outward of the turned-up portion in the lower bead area of the tire there is provided an additional elastomeric reinforcing strip 26 generally referred to as a chafer. Reference letter A, B, C, D, and E illustrate various cross-sectional widths of the tire at various points along the sidewall portion of the tire which are as follows:

A .248 inches (6.30 mm)
B .216 inches (5.48mm)
C .235 inches (5.97 mm)
D .256 inches (6.50 mm)
E .336 inches (8.53 mm)

Disposed radially outwardly of the carcass reinforcing ply structure 22 there is provided a reinforcing belt structure 25 comprising a pair of belt plies 27 and 28 respectively.

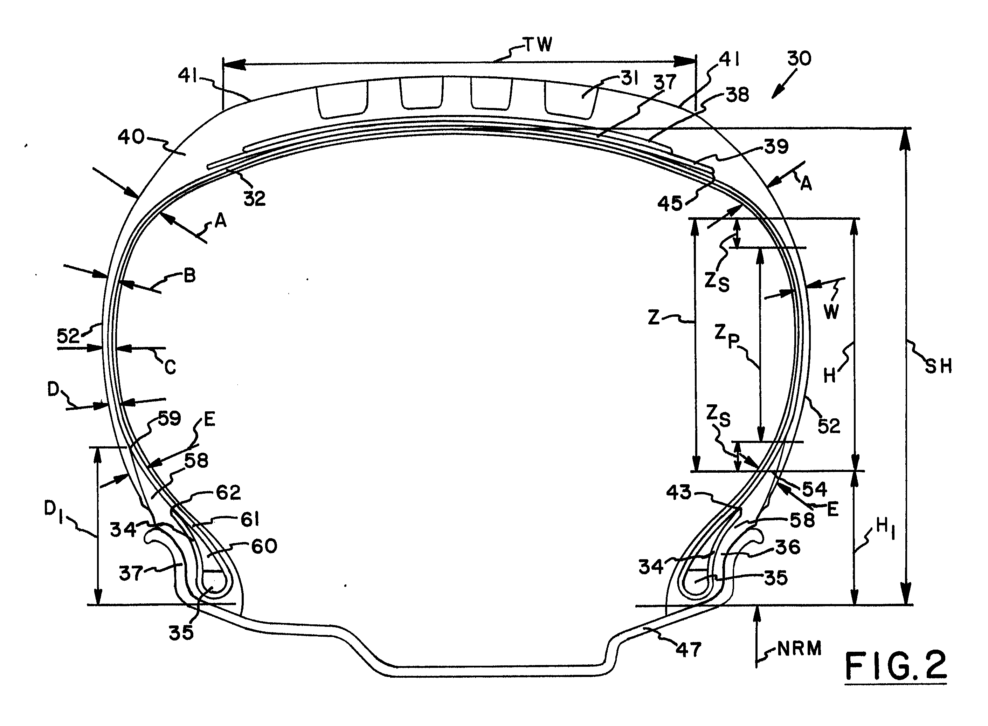

Referring to figure 2, there is illustrated a cross-sectional view of a pneumatic tire 30 made in accordance with the present invention having a ground-engaging tread portion 31. The tire 30 is

0128852

designed to be used with a passenger vehicle and is of the radial type construction. For the purposes of this invention, a tire of the radial type construction (radial tire) is a tire in which the cords of the carcass reinforcing ply structure are oriented at an angle with respect to the mid-circumferential centerplane CP of the tire in the range of about 75° to 90°. The tire 30 is provided with a reinforcing ply structure 32 which provides a plurality of parallel cords oriented at an angle from about 75° to 90° with respect to the mid-circumferential centerplane of the tire. The lateral outer ends 34 of reinforcing ply 32 are wrapped about an inextensible bead core 35 disposed in the bead area 36 of the tire. The tire 30 is also provided with a reinforcing belt structure 37 disposed radially outwardly of the carcass structure 32 beneath tread portion 31. The belt structure 37 comprises a pair of reinforcing plies 38, 39 wherein the lateral ends of plies 38,39 terminate in the shoulder region 40 of the tire 30. For the purposes of this invention the shoulder region of the tire is that region which merges the lateral edges 41 of the tread portion 31 with the sidewall portion of the tire. The tread portion 31 has a tread width TW. For the purposes of this invention, the tread width TW is measured from the footprint of the tire mounted on a wheel for which it was design at rated load and inflation pressure.

The tire 30 is designed such that the carcass reinforcing ply structure from a point 43 substantially axially adjacent the radially outermost point where the tire meets the rim 47 on which the tire is mounted radially outwardly to a point 45 substantially adjacent the lateral ends of the reinforcing belt structure 36 follows the natural equilibrium shape for the tire. The natural equilibrium shape is well known to those skilled in the art and will not be discussed in detail herein. See for example, Chapter II, "Mathematics Underlying the Design of Pneumatic Tires", by John F. Purdy, and Theory for the Merdian Section of Inflated Cord Tire, by R B Day and S D Gehman, Rubber Chemistry and Technology, Volume XXXVI. No. 1, P 11-27, January-March, 1963, both of which are incorporated herein by reference. It is not necessary that the carcass reinforcing ply follow the natural equilibrium path radially inward of point 43 as the rim structure 47 stabilizes the tire radially inwardly thereof. The tire of the present invention is constructed such that there is provided a large flex zone Z in the sidewall portion 52 of the tire. It is important that this flex zone Z be properly positioned in the sidewall of the tire. The radially inner end 54 of zone Z is disposed from the nominal rim diameter NRM of the tire a distance $H_1$ approximately equal to 20% to 30% of the section height SH of the tire. Preferably, the distance $H_1$ is approximately 25% of section height SH as illustrated Figure 2. Additionally, the radial height H of flex zone Z should be at least 40% of the section height SH and no greater than approximately 65% of the section height SH. Preferably the radial height H of flex zone Z is at least 50%. In the particular embodiment illustrated, the height H of zone Z is approximately 56% of the section height SH. Flex zone Z comprises a primary flex zone Zp and two secondary flex zones Zs, one disposed adjacent each radial end of primary zone Zp. The primary flex zone Zp comprises at least 70% of the flex zone Z, preferably at least 75%. In the particular embodiment illustrated, the primary flex zone Zp is about 80% of flex zone Z. The sidewall cross-sectional width W in primary flex zone Zp is substantially constant and is no greater than about .17 in (4.32 mm). In the actual embodiment illustrated, the width W in primary flex zone Zp is about .165 inches (4.19 mm). The width W of each second zone Zs is no greater than about .22 inches (5.58 mm), preferably no greater than about 130% of maximum width W in the primary flex zone Zp.

The cross-sectional width W of the sidewall 52 in flex zone Z at points A, B, C, D and E are as follows:

A   .193 inches (4.90 mm)
B   .150 inches (3.81 mm)
C   .155 inches (3.93 mm)
D   .161 inches (4.09 mm)
E   .214 inches (5.43 mm)

The cross-sectional sidewall width W of the flex zone Z as compared to that of the prior art is substantially less. The points A, B, C, D and E of figure 2 corresponding to points A, B, C, D and E of figure 1. It is important that the overall cross-sectional sidewall width W be as thin as possible. For the purposes of this invention, the cross-sectional width of the sidewall at any given point is measured at an angle substantially perpendicular to the carcass ply tire at that point. The present invention is preferably limited to a tire having a single ply reinforcing structure 32, however, if desired, the reinforcing ply structure may have an additional ply layer. In the case where there are two ply layers, the cross-sectional width W in primary flex zone Zp should be no greater than about .22 inches (5.58 mm). Tires having more than two reinforcing ply layers would unduly increase the sidewall rigidity of the tire. There should be no additional fabric reinforcement in either of the primary or secondary flex zones.

In the present invention there is illustrated a chafer portion 58. The radially outer end 59 of chafer portion 58 is spaced from the NRD a distance $D_1$, no greater than about 35% of the section height SH. In the particular embodiment illustrated, the distance $D_1$ is about 32% of the section height SH. Chafer portion 58 is preferably made of a rubber material having a Shore A hardness of about 85. Chafer portion 58 extends for only short distances into secondary flex zone.

The tire 30 is also provided with an apex 60 disposed between the lateral outer ends 34 and the reinforcing ply 32. The radially outer end 61 of apex 60 and the radially outer end 62 of lateral outer ends 34 are each spaced from the nominal rim diameter NRD a distance $D_2$ no greater than about 25% of the carcass section height SH, preferably no greater than 20%. In the particular embodiment illustrated, the radially outer end 61 of apex 60 is spaced a distance $D_2$ of about 15% of the carcass section height SH from the nominal rim diameter NRD and the radially outer end 62 of the lateral outer ends 34 are spaced a distance of about 16% from the nominal rim diameter NRD.

For the purpose of this invention, the carcass section height SH is the distance from the nominal rim diameter NRD of the tire, as defined by Tire and Rim Association, to the radially outermost point of the carcass reinforcing ply 32. If more than one reinforcing ply is present, it is measured midway between the carcass ply layers.

A tire made in accordance with the present invention when compared to a tire illustrated in figure 1 was found to have substantially the same performance characteristics, while having improved rolling resistance and traction. Additionally, a P165/80R13 size tire made in accordance to the present invention was reduced in weight by approximately 2 pounds over a tire constructed in accordance with the prior art. The following chart indicates the performance characteristics of a tire made in accordance with the present invention as compared to that of the prior art both having the same compounds and tread pattern. These measurements were obtained by testing the tires on the same vehicle and by the same driver. The higher the number the better the performance. Difference of 1 or less are generally considered about equal performance.

|                          | Prior Art | Present Invention |
|--------------------------|-----------|-------------------|
| Returnability Low Speed  | 10        | 10                |
| On-Center Feel           | 6.5       | 6.5               |
| Response Quickness       | 8.0       | 8.0               |
| Response Smoothness      | 10        | 10                |
| Gain-Pass                | 7.5       | 7.0               |
| Evasive Maneuver         | 8.0       | 8.0               |
| Passing Stability        | 7.0       | 7.0               |
| Pylon Evasive            | 6.0       | 7.0               |
| Heavy Transition         | 7.5       | 7.0               |
| Corner Braking           | 7.0       | 7.0               |
| Off Throttle Cornering   | 7.5       | 7.5               |
| Overall Harshness        | 4.7       | 5.0               |
| Initial Impact           | 4.5       | 4.5               |
| Impact Shake             | 4.0       | 4.5               |
| Impact Boom              | 5.5       | 6.0               |
| Joint Slap               | 7.0       | 7.0               |
| Joint Thud               | 5.5       | 5.5               |

It can be seen from the foregoing that the overall performance characteristics between a tire made in accordance with the present invention and a tire according to the prior art were substantially the same. Additionally, the tire of the present invention was found to have a substantial decrease in rolling resistance and increase in high speed performance as illustrated in the following test data. A higher the number indicates improvement in performance.

|  | Prior Art | Present Invention |
| --- | --- | --- |
| Wet Traction (40 MPH) | 100 | 111 |
| Dry Traction (40 MPH) | 100 | 116 |
| Rolling Resistance | 100 | 119 |
| High Speed | 100 | 111 |

It can be seen that the rolling resistance decreased by 19% (a decrease indicates improvement in fuel economy) and the high speed performance increased by 11%. Both of which are substantial improvements in performance.

As previously pointed out, the practice in the prior art for by improved handling characteristics was to stiffen the lower sidewall bead area of the tire. Applicants in the present invention have found, quite unexpectedly, that by reducing the stiffness in the lower bead area of the tire and increasing the flexibility in the sidewall area, performance characteristics could be maintained while improving rolling resistance, high speed performance and traction. This was obtained with the proper combination of sidewall flexibility and cross-sectional shape of the carcass structure.

While certain representative embodiments and details have been shown for purposes of illustrating the invention, it will be apparent to those skilled in the art that various changes and modifications may be made therein without departing from the spirit or scope of the invention.

WE CLAIM:

1. A pneumatic passenger radial tire comprising a ground-engaging tread portion having a pair of lateral edges, a pair of sidewall portions each of said sidewall portions extending from one of said lateral edges respectively radially inwardly of and toward the rotational axis of the tire and terminate in a bead portion, an inextensible bead core disposed in each of said bead portions, a carcass reinforcing ply structure extending through said sidewalls and tread portion and at each end being wrapped about one of said bead cores, said carcass reinforcing ply structure consisting of a single ply layer, a tread reinforcing ply structure disposed radially outwardly of said carcass reinforcing ply structure and beneath said ground-engaging tread portion, characterized by said carcass reinforcing ply structure when said tire is mounted on a rim for which it was designed and inflated to design inflation pressure following the natural equilibrium curve from a point substantially axially adjacent the radially outermost point where said tire meets said rim and radially outwardly to the point substantially adjacent the lateral ends of said tread reinforcing structure, each of said bead portions being provided with a hard rubber apex disposed radially outwardly of said bead core between said carcass ply structure and said end of said carcass reinforcing ply structure, said apex having a radially outer end which terminates at a point spaced from the nominal rim diameter a distance no greater than 20% of the maximum carcass section height, a rubber chafer disposed axially outwardly of said ends of said carcass reinforcing ply structure, the radially outer end of said chafer terminating at a point spaced from the nominal rim diameter a distance no greater than about 35% of the maximum carcass section height, the radially outer end of each of said ends of said carcass reinforcing ply structure being spaced from the nominal rim diameter a distance no greater than approximately 20% of the maximum carcass section height and being disposed closely adjacent the carcass reinforcing ply structure, each of said sidewall portions being provided with a flex zone the radially innermost portion of which is spaced from the nominal rim diameter a distance approximately equal to 20 to 30% of said carcass maximum section height, said flex zone extending radially outwardly with respect to the axis of rotation of said tire a distance of at least 40% of the carcass section height, said flex zone comprising a central primary flex zone and a pair of secondary flex zones, one disposed adjacent each radial end of said primary flex zone, said sidewall in said primary flex zone having a substantially constant cross-sectional width no greater than about .17 inches (4.31 mm), said sidewall in said secondary flex zones having a cross-sectional width equal to or no greater than about .22 inches (5.58 mm) of the cross-sectional width of said sidewall in said primary flex zone.

2. A pneumatic radial passenger tire according to claim 1 further characterized in that said flex zone starts at a point spaced from the nominal rim diameter a distance no greater than about 35% of the carcass maximum section height.

3. A pneumatic radial passenger tire according to claim 1 further characterized in that said flex zone extending radially outwardly with respect to the axis of rotation of said tire a distance of approximately 48% of the carcass section height.

4. A pneumatic radial passenger tire according to claim 1 further characterized in that said sidewall width in said primary flex zone having a cross-sectional width no greater than about .165 inches (4.19 mm).

5. A pneumatic radial passenger tire according to claim 1 further characterized in that said carcass reinforcing ply structure consist of two ply layers, said sidewall portion in said flex zone having a cross-sectional width no greater than about .22 inches (5.58 mm).

6. A pneumatic radial passenger tire according to claim 1 further characterized in that the radially outer end of said chafer is spaced from the nominal rim diameter a distance no greater than about 32% of said maximum carcass section height, said radially outer end of said apex being spaced from said nominal rim diameter a distance no greater than about 15% of the maximum carcass section height, the radially outer end of said lateral ends of said carcass reinforcing ply structure being spaced from the nominal rim diameter a distance no greater than about 16% of the maximum carcass section height.

7. A pneumatic radial passenger tire according to claim 1 further characterized in each of said secondary flex zones have a width no greater than about 130% of the width of said primary flex zone.

## FIG. 1

*PRIOR ART*

0128852

0128852

FIG.2